# EUROPÄISCHE PATENTANMELDUNG

(11) **EP 4 793 324 A1**
(43) Veröffentlichungstag der Anmeldung: **19.08.2026**
(21) Anmeldenummer: 25158387.8
(22) Anmeldetag: 17.02.2025
(51) Int. Cl.: C09D 5/00, C23C 14/02, C23C 14/06, C23C 14/24, C23C 14/34, C08J 7/04, B32B 27/28

(54) **BAUTEIL MIT FUNKTIONELLER OBERFLÄCHE**

(71) Anmelder: Hansgrohe SE, 77761 Schiltach (DE)
(72) Erfinder: Rath, Egbert, 59556 Lippstadt (DE); Dürrholder, Marius, 77781 Biberach (DE)
(74) Vertreter: Wallinger Ricker Schlotter PartGmbB

(57) **Zusammenfassung**

Die Erfindung betrifft ein Bauteil, insbesondere ein Sanitärbauteil, aufweisend: einen Träger; eine siliziumoxidhaltige Haftvermittlerschicht, welche auf dem Träger angeordnet ist; und eine siliziumhaltige und fluorfreie Außenschicht, welche auf der Haftvermittlerschicht angeordnet ist; wobei der Träger ein Substrat aufweist, welches eine Legierung, insbesondere eine Eisen-, Zink- und/oder Kupferlegierung, und/oder ein Polymer, insbesondere ein Thermoplast, aufweist. Die Erfindung betrifft außerdem ein Verfahren zum Herstellen des Bauteils.

## Beschreibung

Die vorliegende Erfindung betrifft ein Bauteil, insbesondere ein Sanitärbauteil, wobei das Bauteil einen Träger, eine siliziumoxidhaltige Haftvermittlerschicht, welche auf dem Träger angeordnet ist, und eine siliziumhaltige und fluorfreie Außenschicht, welche auf der Haftvermittlerschicht angeordnet ist, aufweist, wobei der Träger ein Substrat aufweist, welches eine Legierung, insbesondere eine Eisen-, Zink- und/oder Kupferlegierung, und/oder ein Polymer, insbesondere einen Thermoplast, aufweist.

Zu anwendungsrelevanten Anforderungen, die an Bauteile, insbesondere Sanitärbauteilen, gestellt werden können, gehören u.a. die Eigenschaft, einfach gereinigt werden zu können und/oder die Eigenschaft, die Bildung von sichtbaren Fingerabdrücken auf Oberflächen zu verhindern oder zu reduzieren. Um diesen Anforderungen gerecht zu werden, werden Bauteile häufig mit sogenannten "Easy-to-clean"-Schichten bzw. "Anti-fingerprint"-Schichten beschichtet. Derartige Schichten beinhalten häufig per- und polyfluorierte Alkylverbindungen.

Das Dokument CN 104694929 A beschreibt ein Verfahren zur Bildung einer Anti-Fingerprint-Membran auf einem Sanitärprodukt umfassend das Auftragen von Öl auf die Oberfläche eines galvanisch vernickelten Basismaterials, das Auftragen einer korrosionsbeständigen Legierungsmembranschicht durch Vakuumplattieren, das Auftragen einer Farbschicht durch Vakuumplattieren, das Auftragen einer transparenten Siliziumoxidmembran durch Mittelfrequenz-Magnetronsputtern und das Auftragen einer transparenten Nano-Fingerabdruckschutzmembranschicht aus Fluorpolymer durch Vakuumverdampfung.

Per- und polyfluorierte Alkylverbindungen haben jedoch den Nachteil, dass diese in der Umwelt praktisch nicht abgebaut werden, dauerhaft Wasser und Boden kontaminieren und sich in Organismen entlang der Nahrungskette anreichern.

Unter Gesichtspunkten der Schadstoffbelastung, insbesondere auch in Recycling-Kreisläufen, sind daher Bauteile mit möglichst geringen Gehalten an möglicherweise schädigenden Bestandteilen, insbesondere per- und polyfluorierte Alkylverbindungen, wünschenswert.

Eine Aufgabe der vorliegenden Erfindung ist es, ein Bauteil bereitzustellen, welches zumindest einen der oben genannten Nachteile und/oder (weitere) Nachteile aus dem Stand der Technik bekannter Bauteile verringert oder vermeidet, insbesondere zwei oder mehr der genannten Nachteile verringert oder vermeidet.

Insbesondere kann es eine Aufgabe sein, ein solches Bauteil bereitzustellen, welches vorteilhaft in der Sanitärtechnik eingesetzt werden kann. Vorzugsweise kann das (bereit- bzw. hergestellte) Bauteil ein Griff, eine Taste, ein Möbelbauteil, insbesondere ein Tisch- oder Stuhlgestell, ein Kochgeschirr, ein Gehäuse eines Haushalts- bzw. Hauswarengegenstands, insbesondere einer Küche(neinrichtung), insbesondere eines Abfalleimers oder einer Dunstabzugshaube, und besonders vorteilhaft ein Sanitärbauteil, insbesondere eine Armatur, Brause, Brausestange, Wandnische, WC-Drückerplatte, Seifenschale, ein Seifen- oder Handtuchspender, Handtuchhalter, Abfalleimer oder dergleichen, sein bzw. als solches verwendet bzw. hierzu eingerichtet sein.

Zumindest eine der oben genannten Aufgaben wird durch die Lehre der unabhängigen Ansprüche gelöst. Vorteilhafte Ausgestaltungen werden in den Unteransprüchen beansprucht.

Gemäß einem **ersten Aspekt** der Erfindung wird zumindest eine der oben genannten Aufgaben gelöst durch ein Bauteil, in einer besonders vorteilhaften Ausführung ein Sanitärbauteil, welches aufweist: einen, insbesondere ein- oder mehrlagigen, Träger; eine, insbesondere ein- oder mehrlagige, siliziumoxidhaltige Haftvermittlerschicht, welche auf dem Träger angeordnet ist; und eine, insbesondere ein- oder mehrlagige, siliziumhaltige und fluorfreie Außenschicht, welche auf der Haftvermittlerschicht angeordnet ist; wobei der Träger ein Substrat aufweist, welches eine Legierung, in einer besonders vorteilhaften Ausführung eine Eisen-, Zink- und/oder Kupferlegierung, und/oder ein Polymer, in einer besonders vorteilhaften Ausführung ein Thermoplast, aufweist, in einer Weiterbildung wenigstens teilweise, in einer Ausführung zu wenigstens 50 Gew.-% und/oder zu wenigstens 50 Vol.-%, in einer Weiterbildung zu wenigstens 75 Gew.-% und/oder zu wenigstens 75 Vol.-%, insbesondere zu wenigstens 95 Gew.-% und/oder zu wenigstens 95 Vol.-%, in einer Weiterbildung vollständig, aus einer Legierung, insbesondere einer bzw. der Eisen-, Zink- und/oder Kupferlegierung, und/oder einem bzw. dem Polymer, insbesondere Thermoplast, besteht, bzw. ein solches Bauteil vorgeschlagen.

Gemäß einem **zweiten Aspekt** der Erfindung wird zumindest eine der oben genannten Aufgaben gelöst durch ein Verfahren zum Herstellen eines Bauteils gemäß dem ersten Aspekt der Erfindung, wobei das Verfahren folgende Schritte aufweist: Bereitstellen des Trägers; Erzeugen der Haftvermittlerschicht, in einer Ausführung mittels eines Vakuumbeschichtungsverfahrens; und Erzeugen der Außenschicht, in einer Ausführung mittels eines Vakuumbeschichtungsverfahrens, bzw. ein solches Verfahren vorgeschlagen.

In einer Ausführung weist das Substrat bzw. die bzw. dessen Legierung eine Messing-Legierung und/oder eine Stahl-Legierung auf, kann insbesondere eine Messing-Legierung oder eine, vorzugsweise rostfreie, Stahl-Legierung sein. Für solche Substrate ist die vorliegende Erfindung aufgrund ihrer Werkstoffeigenschaften besonders vorteilhaft.

In einer Ausführung ist die Außenschicht eine außenliegende bzw. umgebungsseitige bzw. äußerste Schicht und/oder dient dazu bzw. ist dazu eingerichtet, oberflächliche Verschmutzungen des Bauteils zu verringern und/oder ein Reinigen des Bauteils zu erleichtern. In einer Weiterbildung ist die Außenschicht eine sogenannte "Easy-to-clean"-Schicht bzw. eine "Anti-fingerprint"-Schicht. Vorzugsweis verändert die Außenschicht optische Eigenschaften, insbesondere eine Farbe und/oder einen Reflexionsgrad, des Trägers nicht oder nicht wesentlich.

In einer Ausführung dient die Haftvermittlerschicht dazu bzw. ist dazu eingerichtet, die Haftung der Außenschicht an dem Träger zu verbessern. In einer Weiterbildung dient die Haftvermittlerschicht dazu bzw. ist dazu eingerichtet, die Beständigkeit der Außenschicht, insbesondere gegen zur Reinigung des Bauteils eingesetzte Reinigungsmittel, zu verbessern. Vorzugsweise verändert die Haftvermittlerschicht optische Eigenschaften, in einer Ausführung eine Farbe und/oder einen Reflexionsgrad, des Trägers nicht oder nicht wesentlich.

Im Sinne der vorliegenden Erfindung sind Polysiloxane chemische Verbindungen mit der allgemeinen Formel R₃Si-[O-SiR₂]ₙ-O-SiR₃, wobei R Wasserstoffatome oder Alkylgruppen sein können. In funktionalisierten Polysiloxanen ist zumindest ein Rest "R" durch eine funktionale Gruppe ersetzt, also keine Alkylgruppe. Im Gegensatz zu den Silanen sind die Siliziumatome nicht untereinander, sondern über ein Sauerstoffatom mit ihrem benachbarten Siliziumatom verknüpft: Si-O-Si. Siloxane mit R = CH₃ werden als Polydimethylsiloxane bezeichnet, wohingegen Oligomere oder polymere Organosiloxane (Siloxane mit R ≠ H) generell als Silikone bezeichnet werden.

Im Sinne der vorliegenden Erfindung ist ein Siliziumoxid, wie dieses in einer siliziumoxidhaltigen Haftvermittlerschicht vorliegt, eine Struktur der Zusammensetzung (SiO₂)ₙ mit n als ganzer Zahl größer als 1 oder gleich 1. Das Siliziumoxid ist in einer Ausführung ein Siliziumdioxid, das insbesondere in amorphen oder in kristallinen Modifikationen auftreten kann. Synthetisches SiO₂, das bevorzugt amorph vorliegt, wird großtechnisch oft über Fällungsprozesse erhalten, insbesondere ausgehend von Wasserglas, das durch Aufschließen von Quarzsand mit Natriumcarbonat oder Kaliumcarbonat erhältlich ist. So erzeugtes SiO₂ nennt man je nach Prozessbedingungen gefälltes Siliziumdioxid (historisch: Fällungskieselsäuren), Kieselsolen oder Kieselgele. Gefälltes Siliziumdioxid ist beispielsweise unter Handelsnamen wie MANSIL^{®}, ULTRASIL^{®}, UNISIL^{®}, HI-SIL^{®} oder FLO-GARD^{®} erhältlich. Natürlich ist die vorliegende Erfindung nicht hierauf beschränkt. Ein weiteres synthetisch erzeugtes, amorphes Siliziumdioxid ist das so genannte pyrogene Siliziumdioxid. Zu dessen Herstellung wird in einem ersten Schritt Quarzsand durch ein geeignetes Reduktionsmittel zu Silizium reduziert. Als besonders bevorzugtes Reduktionsmittel wird hierbei Kohlenstoff verwendet. Das Silizium wird im Anschluss durch Reaktion mit Chlor zu Siliziumtetrachlorid (SiCl₄) umgesetzt. Dieses wird in einer Knallgasflamme (H₂ + O₂) unter hohen Temperaturen pyrolysiert, wobei neben hochreinem, amorphen Siliziumdioxid als Nebenprodukt Salzsäure abfällt (HCl). Pyrogenes Siliziumdioxid ist beispielsweise unter Handelsnamen wie AEROSIL^{®}, AEROXIDE^{®}, CAB-O-SIL^{®}, REOLOSIL^{™} oder XYSIL^{®} erhältlich. Natürlich ist die vorliegende Erfindung nicht hierauf beschränkt.

Im Sinne der vorliegenden Erfindung wird unter fluorfrei verstanden, dass die Außenschicht höchstens 0,01 Gew.-% und/oder höchstens 0,01 Vol.-%, vorzugsweise höchstens 0,001 Gew.-% und/oder höchstens 0,001 Vol.-%, besonders bevorzugt kein nachweisbares bzw. keine Spuren von, Fluor aufweist.

Die Maßeinheit "µm" steht vorliegend für Mikrometer, also ein millionstel Meter, d.h. 1 µm = 10⁻⁶ m. Die Maßeinheit "nm" steht vorliegend für Nanometer, also ein milliardstel Meter, d.h. 1 nm = 10⁻⁹ m.

Die siliziumoxidhaltige Haftvermittlerschicht weist in einer Ausführung wenigstens 50 Gew.-% und/oder wenigstens 50 Vol.-%, in einer Weiterbildung wenigstens 75 Gew.-% und/oder wenigstens 75 Vol.-%, insbesondere wenigstens 95 Gew.-% und/oder wenigstens 95 Vol.-%, Siliziumoxid auf, kann in einer Weiterbildung vollständig hieraus bestehen.

In einer Ausführung des Bauteils weist die Außenschicht funktionalisiertes Polysiloxan auf, in einer Weiterbildung besteht die Außenschicht wenigstens teilweise, in einer Ausführung zu wenigstens 50 Gew.-% und/oder zu wenigstens 50 Vol.-%, in einer Weiterbildung zu wenigstens 75 Gew.-% und/oder zu wenigstens 75 Vol.-%, insbesondere zu wenigstens 95 Gew.-% und/oder zu wenigstens 95 Vol.-%, in einer Weiterbildung vollständig aus funktionalisiertem Polysiloxan.

Durch eine Außenschicht, welche teilweise oder vollständig aus funktionalisiertem Polysiloxan besteht, können oberflächliche Verschmutzungen des Bauteils verringert werden sowie ein Reinigen des Bauteils erleichtert werden. In einer Ausführung ist die Außenschicht eine sogenannte "Easy-to-clean"-Schicht bzw. eine "Anti-fingerprint"-Schicht.

In einer Ausführung des Bauteils weist die Haftvermittlerschicht ein Material der Zusammensetzung SiOₓ, wobei die(se) chemische Zusammensetzung den Bereich x = 0 bis x = 2, in einer Weiterbildung den Bereich x > 0 bis x = 2, umfasst, auf, in einer Weiterbildung besteht die Haftvermittlerschicht wenigstens teilweise, in einer Ausführung zu wenigstens 50 Gew.-% und/oder zu wenigstens 50 Vol.-%, in einer Weiterbildung zu wenigstens 75 Gew.-% und/oder zu wenigstens 75 Vol.-%, insbesondere zu wenigstens 95 Gew.-% und/oder zu wenigstens 95 Vol.-%, in einer Weiterbildung vollständig aus einem Material der Zusammensetzung SiOₓ, wobei die chemische Zusammensetzung den Bereich x = 0 bis x = 2, in einer Weiterbildung den Bereich x > 0 bis x = 2, umfasst.

Durch die Haftvermittlerschicht, welche teilweise oder vollständig aus einem Material der Zusammensetzung SiOₓ, wobei die chemische Zusammensetzung den Bereich x = 0 bis x = 2, in einer Weiterbildung x > 0 bis x = 2, umfasst, besteht, kann die Haftung der Außenschicht an dem Träger verbessert werden. Insbesondere kann durch die Haftvermittlerschicht die Beständigkeit der Außenschicht, insbesondere gegen zur Reinigung des Bauteils eingesetzte Reinigungsmittel, verbessert werden.

In einer Ausführung des Bauteils beträgt eine Dicke, in einer Weiterbildung eine maximale, minimale und/oder gemittelte Dicke, der Außenschicht wenigstens 15 nm, insbesondere wenigstens 20 nm, und/oder höchstens 100 nm, insbesondere höchstens 30 nm.

Durch eine Dicke, insbesondere eine maximale, minimale und/oder gemittelte Dicke, der Außenschicht von wenigstens 15 nm, insbesondere von wenigstens 20 nm, kann gewährleistet werden, dass die Außenschicht ihre funktionellen Eigenschaften, insbesondere eine Verringerung von oberflächlichen Verschmutzungen des Bauteils sowie eine Erleichterung des Reinigens des Bauteils, in besonders vorteilhaftem Maße aufweist. Durch eine Dicke, insbesondere eine maximale, minimale und/oder gemittelte Dicke, der Außenschicht von höchstens 100 nm, insbesondere von höchstens 30 nm, kann gewährleistet werden, dass die Außenschicht die optischen Eigenschaften, insbesondere die Farbe und den Reflexionsgrad, des Trägers nicht oder nicht wesentlich verändert.

In einer Ausführung des Bauteils beträgt eine Dicke, in einer Weiterbildung eine maximale, minimale und/oder gemittelte Dicke, der Haftvermittlerschicht wenigstens 5 nm, insbesondere wenigstens 10 nm, und/oder höchstens 100 nm, insbesondere höchstens 20 nm.

Durch eine Dicke, insbesondere eine maximale, minimale und/oder gemittelte Dicke, der Haftvermittlerschicht von wenigstens 5 nm, insbesondere von wenigstens 10 nm, kann gewährleistet werden, dass die Haftvermittlerschicht ihre funktionellen Eigenschaften, insbesondere die Verbesserung der Haftung der Außenschicht an dem Träger und die damit verbundene Beständigkeit gegenüber Reinigungsmittel der Außenschicht, in besonders vorteilhaftem Maße aufweist. Durch eine Dicke, insbesondere eine maximale, minimale und/oder gemittelte Dicke, der Haftvermittlerschicht von höchstens 100 nm, insbesondere von höchstens 20 nm, kann gewährleistet werden, dass die Haftvermittlerschicht die optischen Eigenschaften, insbesondere die Farbe und den Reflexionsgrad, des Trägers nicht oder nicht wesentlich verändert.

In einer Ausführung des Bauteils weist der Träger eine erste Zwischenschicht auf, welche zwischen dem Substrat und der Haftvermittlerschicht angeordnet ist, wobei diese erste Zwischenschicht Nickel aufweist, in einer Weiterbildung wenigstens teilweise, in einer Ausführung zu wenigstens 50 Gew.-% und/oder zu wenigstens 50 Vol.-%, in einer Weiterbildung zu wenigstens 75 Gew.-% und/oder zu wenigstens 75 Vol.-%, insbesondere zu wenigstens 95 Gew.-% und/oder zu wenigstens 95 Vol.-%, in einer Weiterbildung vollständig aus Nickel besteht.

Vorzugsweise weist die erste Zwischenschicht Glanznickel und/oder Halbglanznickel, kann insbesondere hieraus bestehen.

Durch eine erste Zwischenschicht, welche teilweise oder vollständig aus Nickel besteht, kann insbesondere der Korrosionsschutz des Bauteils verbessert werden. Zusätzlich oder alternativ kann Nickel zur Einebnung der Oberfläche für Hochglanzeffekte dienen.

In einer Ausführung des Bauteils beträgt eine Dicke, in einer Weiterbildung eine maximale, minimale und/oder gemittelte Dicke, der ersten Zwischenschicht wenigstens 2,5 µm, insbesondere wenigstens 5 µm, in einer Weiterbildung wenigstens 10 µm, und/oder höchstens 50 µm, insbesondere höchstens 25 µm, in einer Weiterbildung höchstens 15 µm.

Durch eine Dicke, insbesondere eine maximale, minimale und/oder gemittelte Dicke, der ersten Zwischenschicht von wenigstens 2,5 µm, insbesondere von wenigstens 5 µm, in einer Weiterbildung wenigstens 10 µm, kann gewährleistet werden, dass die erste Zwischenschicht ihre funktionellen Eigenschaften, insbesondere eine korrosionsschützende Wirkung, in besonders vorteilhaftem Maße aufweist. Durch eine Dicke, insbesondere eine maximale, minimale und/oder gemittelte Dicke, der ersten Zwischenschicht von höchstens 50 µm, insbesondere von höchstens 25 µm, in einer Weiterbildung höchstens 15 µm, kann gewährleistet werden, dass die erste Zwischenschicht keine oder nur geringfügige Spannungen aufweist, was das Risiko eines Bruchs oder Risses verringert, dass die erste Zwischenschicht ausreichend an dem Material, auf dem die erste Zwischenschicht angeordnet ist, haftet und dass die erste Zwischenschicht vergleichsweise kostengünstig hergestellt werden kann.

In einer Ausführung des Bauteils weist der Träger eine zweite Zwischenschicht auf, welche zwischen der ersten Zwischenschicht und der Haftvermittlerschicht angeordnet ist, wobei diese zweite Zwischenschicht Chrom aufweist, in einer Weiterbildung wenigstens teilweise, in einer Ausführung zu wenigstens 50 Gew.-% und/oder zu wenigstens 50 Vol.-%, in einer Weiterbildung zu wenigstens 75 Gew.-% und/oder zu wenigstens 75 Vol.-%, insbesondere zu wenigstens 95 Gew.-% und/oder zu wenigstens 95 Vol.-%, in einer Weiterbildung vollständig aus Chrom besteht.

Durch eine zweite Zwischenschicht, welche teilweise oder vollständig aus Chrom besteht, kann der Korrosionsschutz des Bauteils verbessert werden. Zusätzlich oder alternativ kann durch die Härte der Chromschicht eine zusätzliche mechanische und chemische Beständigkeit der zweiten Zwischenschicht geschaffen werden. Zusätzlich oder alternativ kann die zweite Zwischenschicht dem Bauteil ein glänzendes, metallisches und somit optisch anspruchsvolleres Aussehen verleihen.

In einer Ausführung des Bauteils beträgt eine Dicke, in einer Weiterbildung eine maximale, minimale und/oder gemittelte Dicke, der zweiten Zwischenschicht wenigstens 50 nm, insbesondere wenigstens 100 nm, und/oder höchstens 1,2 µm, insbesondere höchstens 900 nm, in einer Weiterbildung höchstens 200 nm.

Durch eine Dicke, insbesondere eine maximale, minimale und/oder gemittelte Dicke, der zweiten Zwischenschicht von wenigstens 50 nm, insbesondere von wenigstens 100 nm, kann gewährleistet werden, dass die zweite Zwischenschicht ihre funktionellen Eigenschaften, insbesondere eine korrosionsschützende Wirkung und/oder mechanische und chemische Beständigkeit, in besonders vorteilhaftem Maße aufweist und dem Bauteil in besonders vorteilhaftem Maße ein glänzendes, metallisches und somit optisch anspruchsvolleres Aussehen verleiht. Durch eine Dicke, insbesondere eine maximale, minimale und/oder gemittelte Dicke, der zweiten Zwischenschicht von höchstens 1,2 µm, insbesondere von höchstens 900 nm, in einer Weiterbildung höchstens 200 nm, kann gewährleistet werden, dass die zweite Zwischenschicht keine oder nur geringfügige Spannungen aufweist, was das Risiko eines Bruchs oder Risses verringert, dass die zweite Zwischenschicht ausreichend an dem Material, auf dem die zweite Zwischenschicht angeordnet ist, haftet und dass die zweite Zwischenschicht vergleichsweise kostengünstig hergestellt werden kann.

In einer Ausführung des Bauteils weist der Träger eine dritte Zwischenschicht auf, welche zwischen der zweiten Zwischenschicht und der Haftvermittlerschicht angeordnet ist, wobei diese dritte Zwischenschicht eine Verbindung ausgewählt aus den Verbindungen Zirkonnitrid, Zirkonkarbid, Zirkonoxid, Chromnitrid, Chromkarbid, Chromoxid, Titannitrid, Titankarbid und Titanoxid, Chrom-Wolframnitrid, Chrom-Wolframkarbid, Chrom-Wolframoxid oder einer Mischung daraus, aufweist, in einer Weiterbildung wenigstens teilweise, in einer Ausführung zu wenigstens 50 Gew.-% und/oder zu wenigstens 50 Vol.-%, in einer Weiterbildung zu wenigstens 75 Gew.-% und/oder zu wenigstens 75 Vol.-%, insbesondere zu wenigstens 95 Gew.-% und/oder zu wenigstens 95 Vol.-%, in einer Weiterbildung vollständig aus einer Verbindung ausgewählt aus den Verbindungen Zirkonnitrid, Zirkonkarbid, Zirkonoxid, Chromnitrid, Chromkarbid, Chromoxid, Titannitrid, Titankarbid und Titanoxid, Chrom-Wolframnitrid, Chrom-Wolframkarbid, Chrom-Wolframoxid oder einer Mischung daraus, besteht.

Durch eine dritte Zwischenschicht, welche teilweise oder vollständig aus einer Verbindung ausgewählt aus den Verbindungen Zirkonnitrid, Zirkonkarbid, Zirkonoxid, Chromnitrid, Chromkarbid, Chromoxid, Titannitrid, Titankarbid und Titanoxid, Chrom-Wolframnitrid, Chrom-Wolframkarbid, Chrom-Wolframoxid oder einer Mischung daraus, besteht, kann die Oberflächenhärte des Bauteils erhöht werden. Zudem werden die mechanischen und chemischen Beständigkeitseigenschaften verbessert. Darüber hinaus können durch die dritte Zwischenschicht die optischen Eigenschaften, insbesondere die Farbe und den Reflexionsgrad, des Bauteils gezielt verändert werden und somit dem Bauteil ein optisch anspruchsvolleres Aussehen verliehen werden.

In einer Ausführung des Bauteils beträgt eine Dicke, in einer Weiterbildung eine maximale, minimale und/oder gemittelte Dicke, der dritten Zwischenschicht wenigstens 50 nm, insbesondere wenigstens 100 nm, und/oder höchstens 1,2 µm, insbesondere höchstens 900 nm.

Durch eine Dicke, insbesondere eine maximale, minimale und/oder gemittelte Dicke, der dritten Zwischenschicht von wenigstens 50 nm, insbesondere von wenigstens 100 nm, kann gewährleistet werden, dass die dritte Zwischenschicht ihre funktionellen Eigenschaften, insbesondere eine Erhöhung der Oberflächenhärte des Bauteils, in besonders vorteilhaftem Maße aufweist sowie dass die optischen Eigenschaften, insbesondere die Farbe und den Reflexionsgrad, des Bauteils im vorgesehenen Maße verändert werden. Durch eine Dicke, insbesondere eine maximale, minimale und/oder gemittelte Dicke, der dritten Zwischenschicht von höchstens 1,2 µm, insbesondere von höchstens 900 nm, kann gewährleistet werden, dass die dritte Zwischenschicht keine oder nur geringfügige Spannungen aufweist, was das Risiko eines Bruchs oder Risses verringert, dass die dritte Zwischenschicht ausreichend an dem Material, auf dem die dritte Zwischenschicht angeordnet ist, haftet und dass die dritte Zwischenschicht vergleichsweise kostengünstig hergestellt werden kann.

In eine Ausführung des Bauteils weist die dritte Zwischenschicht eine erste Lage, welche auf der zweiten Zwischenschicht angeordnet ist und welche Zirkon, Chrom und/oder Titan aufweist, eine zweite Lage, welche auf der ersten Lage angeordnet ist und welche karbonitriertes Zirkon, karbonitriertes Chrom und/oder karbonitriertes Titan aufweist, und in einer Weiterbbildung eine dritte Lage, welche zwischen der zweiten Lage und der Haftvermittlerschicht angeordnet ist und welche Zirkonoxid, Chromoxid und/oder Titanoxid aufweist, auf. In einer Weiterbildung weist die dritte Zwischenschicht eine erste Lage, eine zweite Lage und eine dritte Lage auf, wobei die erste Lage Zirkon aufweist, wobei die zweite Lage karbonitriertes Zirkon aufweist und wobei die dritte Lage Zirkonoxid aufweist, oder wobei die erste Lage Chrom aufweist, wobei die zweite Lage karbonitriertes Chrom aufweist und wobei die dritte Lage Chromoxid aufweist, oder wobei die erste Lage Titan aufweist, wobei die zweite Lage karbonitriertes Titan aufweist und wobei die dritte Lage Titanoxid aufweist. In einer Ausführung weist die dritte Zwischenschicht eine erste Lage, eine zweite Lage und eine dritte Lage auf, wobei die erste Lage, die zweite Lage und die dritte Lage untereinander einen chemischen Gradienten aufweisen.

Durch eine dritte Zwischenschicht, welche eine erste Lage, eine zweite Lage und gegebenenfalls eine dritte Lage aufweist, kann die Oberflächenhärte des Bauteils in besonders vorteilhaften Maße erhöht werden. Zudem werden die mechanischen und chemischen Beständigkeitseigenschaften in besonders vorteilhaftem Maße verbessert. Darüber hinaus können die optischen Eigenschaften, insbesondere die Farbe und den Reflexionsgrad, des Bauteils in besonders vorteilhaftem Maße gezielt verändert werden und somit dem Bauteil ein optisch anspruchsvolleres Aussehen verliehen werden.

In einer Ausführung des Bauteils beträgt eine Dicke, in einer Weiterbildung eine maximale, minimale und/oder gemittelte Dicke, der ersten Lage wenigstens 50 nm, insbesondere wenigstens 100 nm, und/oder höchstens 500 nm, insbesondere höchstens 200 nm.

In einer Ausführung des Bauteils beträgt eine Dicke, in einer Weiterbildung eine maximale, minimale und/oder gemittelte Dicke, der zweiten Lage wenigstens 50 nm, insbesondere wenigstens 100 nm, und/oder höchstens 500 nm, insbesondere höchstens 200 nm.

In einer Ausführung des Bauteils beträgt eine Dicke, in einer Weiterbildung eine maximale, minimale und/oder gemittelte Dicke, der dritten Lage wenigstens 50 nm, insbesondere wenigstens 100 nm, und/oder höchstens 500 nm, insbesondere höchstens 200 nm.

Durch eine Dicke, insbesondere eine maximale, minimale und/oder gemittelte Dicke, der ersten Lage von wenigstens 50 nm, insbesondere von wenigstens 100 nm, der zweiten Lage von wenigstens 50 nm, insbesondere von wenigstens 100 nm, und der dritten Lage von wenigstens 50 nm, insbesondere von wenigstens 100 nm, kann gewährleistet werden, dass die dritte Zwischenschicht ihre funktionellen Eigenschaften, insbesondere eine Erhöhung der Oberflächenhärte des Bauteils, in besonders vorteilhaftem Maße aufweist sowie dass die optischen Eigenschaften, insbesondere die Farbe und den Reflexionsgrad, des Bauteils im vorgesehenen Maße verändert werden. Durch eine Dicke, insbesondere eine maximale, minimale und/oder gemittelte Dicke, der ersten Lage von höchstens 500 nm, insbesondere von höchstens 200 nm, der zweiten Lage von höchstens 500 nm, insbesondere von höchstens 200 nm, und der dritten Lage von höchstens 500 nm, insbesondere von höchstens 200 nm, kann gewährleistet werden, dass die dritte Zwischenschicht keine oder nur geringfügige Spannungen aufweist, was das Risiko eines Bruchs oder Risses verringert, dass die dritte Zwischenschicht ausreichend an dem Material, auf dem die dritte Zwischenschicht angeordnet ist, haftet und dass die dritte Zwischenschicht vergleichsweise kostengünstig hergestellt werden kann.

In einer Ausführung weist die dritte Zwischenschicht eine größere Dicke auf als die zweite Zwischenschicht. Dies hat den Vorteil, dass insbesondere die Oberflächenhärte und die mechanischen und chemischen Beständigkeitseigenschaften des Bauteils verbessert und die optischen Eigenschaften, insbesondere die Farbe und der Reflexionsgrad, des Bauteils gezielt verändert werden und somit dem Bauteil ein optisch anspruchsvolleres Aussehen verliehen werden kann.

In einer Ausführung weist die zweite Zwischenschicht eine größere Dicke auf als die dritte Zwischenschicht. Dies hat den Vorteil, dass insbesondere der Korrosionsschutz und die mechanische und chemische Beständigkeit des Bauteils verbessert und dem Bauteil ein glänzendes, metallisches und somit optisch anspruchsvolleres Aussehen verliehen werden kann.

In einer Ausführung weisen die zweite Zwischenschicht und die dritte Zwischenschicht eine wenigstens im Wesentlichen gleiche Schichtdicke auf. Dies hat den Vorteil, dass insbesondere sowohl die Oberflächenhärte, die mechanischen und chemischen Beständigkeitseigenschaften als auch der Korrosionsschutz des Bauteils verbessert werden kann und dem Bauteil zudem ein optisch anspruchsvolleres Aussehen verliehen werden kann.

In einer Ausführung des Bauteils weist der Träger eine vierte Zwischenschicht auf, welche zwischen dem Substrat und der ersten Zwischenschicht angeordnet ist, wobei diese vierte Zwischenschicht Kupfer aufweist, in einer Weiterbildung wenigstens teilweise, in einer Ausführung zu wenigstens 50 Gew.-% und/oder zu wenigstens 50 Vol.-%, in einer Weiterbildung zu wenigstens 75 Gew.-% und/oder zu wenigstens 75 Vol.-%, insbesondere zu wenigstens 95 Gew.-% und/oder zu wenigstens 95 Vol.-%, in einer Weiterbildung vollständig aus Kupfer besteht.

Durch eine vierte Zwischenschicht kann die Haftung der ersten Zwischenschicht an dem Substrat verbessert werden.

In einer Ausführung des Bauteils beträgt eine Dicke, in einer Weiterbildung eine maximale, minimale und/oder gemittelte Dicke, der vierten Zwischenschicht wenigstens 2,5 µm, insbesondere wenigstens 5 µm, in einer Weiterbildung wenigstens 10 µm, und/oder höchstens 50 µm, insbesondere höchstens 40 µm, in einer Weiterbildung höchstens 20 µm.

Durch eine Dicke, insbesondere eine maximale, minimale und/oder gemittelte Dicke, der vierten Zwischenschicht von wenigstens 2,5 µm, insbesondere von wenigstens 5 µm, in einer Weiterbildung von wenigstens 10 µm, kann gewährleistet werden, dass die vierte Zwischenschicht ihre funktionellen Eigenschaften, insbesondere eine Verbesserung der Haftung der ersten Zwischenschicht an dem Substrat, in besonders vorteilhaftem Maße aufweist. Durch eine Dicke, insbesondere eine maximale, minimale und/oder gemittelte Dicke, der vierte Zwischenschicht von höchstens 50 µm, insbesondere von höchstens 40 µm, in einer Weiterbildung höchstens 20 µm, kann gewährleistet werden, dass die vierte Zwischenschicht keine oder nur geringfügige Spannungen aufweist, was das Risiko eines Bruchs oder Risses verringert, dass die vierte Zwischenschicht ausreichend an dem Material, auf dem die vierte Zwischenschicht angeordnet ist, haftet und dass die vierte Zwischenschicht vergleichsweise kostengünstig hergestellt werden kann.

In einer Ausführung des Bauteils ist dieses mittels eines Verfahrens gemäß dem zweiten Aspekt der Erfindung herstellbar, in einer Ausführung hergestellt.

Die Möglichkeit, ein hier beschriebenes Bauteil durch Erzeugen einer Haftvermittlerschicht und einer Außenschicht, insbesondere mittels eines Vakuumbeschichtungsverfahrens, herstellen zu können, bedeutet insbesondere, dass das Bauteil, welches eine hier beschriebene Haftvermittlerschicht und eine hier beschriebene Außenschicht aufweist, (vorzugsweise auch) mit gebräuchlichen Verfahren für aus dem Stand der Technik bekannte Bauteile hergestellt werden kann. Vorteilhafterweise sind daher für die Herstellung von Bauteilen, die eine hier beschriebene Haftvermittlerschicht und eine hier beschriebene Außenschicht aufweisen, keine oder nur sehr geringe Anpassungen bestehender Prozesse und Werkzeuge für aus dem Stand der Technik bekannter Bauteile notwendig.

In einer Ausführung des Verfahrens wird die Haftvermittlerschicht mittels Plasmapolymerisation wenigstens eines Silikonöl-Präkursors, vorzugsweise in einer Sauerstoffatmosphäre, und/oder mittels Vakuumverdampung und/oder mittels Sputtern erzeugt.

Vorzugsweise wird als Silikonöl-Präkursors Hexamethyldisiloxan eingesetzt.

Die Erzeugung der Haftvermittlerschicht mittels Plasmapolymerisation wenigstens eines Silikonöl-Präkursors, insbesondere in einer Sauerstoffatmosphäre, ermöglicht eine vergleichsweise simple, kostengünstige aber zugleich präzise Möglichkeit zur Erzeugung der Haftvermittlerschicht. Bei der Schichtabscheidung mittels Plasmapolymerisation werden in einer Ausführung, vorzugsweise gasförmige, Ausgangsstoffe, in einer Ausführung Hexamethyldisiloxan (HMDSO) oder Hexamethyldisilazan (HMDSN), in einer, vorzugsweise mit Sauerstoff dotierten, Atmosphäre verwendet, woraus sich eine SiOₓ-Schicht abscheidet. Bei der Erzeugung der Haftvermittlerschicht mittels Vakuumverdampfung handelt es sich vorzugsweise um einen Siliziumdioxid (SiO₂)-Verdampfungsprozess, vorzugsweise werden bei der Vakuumverdampung Silizium-(II)-oxid oder Silizium-(IV)-dioxid verwendet. Bei der Erzeugung der Haftvermittlerschicht mittels Sputtern handelt es sich vorzugsweise um SiO-Sputtern, vorzugsweise wird beim Sputtern Siliziumoxid SiO₂ als Target-Material verwendet.

In einer Ausführung des Verfahrens wird die Außenschicht mittels, insbesondere plasmagestützter, Verdampfung eines funktionalisierten Beschichtungsmaterials erzeugt.

Die Erzeugung der Außenschicht mittels, insbesondere plasmagestützter, Verdampfung eines funktionalisierten Beschichtungsmaterials ermöglicht eine vergleichsweise simple, kostengünstige aber zugleich präzise Möglichkeit zur Erzeugung der Außenschicht.

In einer Ausführung des Verfahrens werden die Verfahrensschritte Erzeugen der Haftvermittlerschicht und Erzeugen der Außenschicht in derselben Beschichtungskammer durchgeführt.

Dies bietet den Vorteil, dass die Außenschicht direkt auf der Haftvermittlerschicht erzeugt werden kann, ohne dass das Bauteil die Beschichtungskammer verlassen muss, was eine vergleichsweise zeitsparende und kostengünstige Erzeugung der Haftvermittlerschicht und der Außenschicht auf dem Träger ermöglicht.

In einer Ausführung weist das Verfahren nach dem Verfahrensschritt Erzeugen der Außenschicht den Verfahrensschritt auf: Vernetzen der Haftvermittlerschicht und/oder der Außenschicht wenigstens teilweise außerhalb der Beschichtungskammer. Ein Erzeugen einer Schicht im Sinne der vorliegenden Erfindung kann entsprechend ein Aufbringen von Schichtmaterial und/oder ein wenigstens teilweises Umwandeln, insbesondere wenigstens teilweises Verfestigen oder dergleichen, in einer Ausführung aktives (Bewirken eines) Umwandeln(s), insbesondere wenigstens teilweises aktives (Bewirken eines) Verfestigen(s) oder dergleichen, oder passives Umwandeln bzw. Umwandelnlassen, insbesondere wenigstens teilweises passives Verfestigen bzw. Verfestigenlassen oder dergleichen, umfassen, insbesondere hieraus bzw. nur aus dem Aufbringen, nur aus dem wenigstens teilweisen Umwandeln oder aus dem Aufbringen und dem wenigstens teilweisen Umwandeln bestehen.

Durch den Verfahrensschritt Vernetzen der Haftvermittlerschicht und/oder der Außenschicht wenigstens teilweise außerhalb der Beschichtungskammer können die Formstabilität, die mechanischen Eigenschaften, insbesondere die Festigkeit und Härte, und die Reaktionsbeständigkeit der Haftvermittlerschicht und/oder der Außenschicht erhöht werden.

In einer Ausführung weist das Verfahren nach dem Verfahrensschritt Erzeugen der Außenschicht und vor dem Verfahrensschritt Vernetzen der Haftvermittlerschicht und/oder der Außenschicht (wenigstens) teilweise außerhalb der Beschichtungskammer den Verfahrensschritt auf: Vernetzen der Haftvermittlerschicht und/oder der Außenschicht auch bzw. teilweise innerhalb der Beschichtungskammer.

Durch den Verfahrensschritt Vernetzen der Haftvermittlerschicht und/oder der Außenschicht auch bzw. teilweise innerhalb der Beschichtungskammer können die Formstabilität, die mechanischen Eigenschaften, insbesondere die Festigkeit und Härte, und die Reaktionsbeständigkeit der Haftvermittlerschicht und/oder der Außenschicht noch weiter erhöht werden.

Zum Nachweis der Schichtdicken und/oder -zusammensetzungen können in einer Ausführung eine oder mehrere obere Schichten, vorzugsweise wenigstens die obersten drei Schichten, und/oder die wenigstens die obersten 20 nm, insbesondere wenigstens die obersten 30 nm, vorteilhaft mittels Flugzeit-Sekundärionen-Massenspektrometrie (ToF-SIMS) analysiert werden. Dazu werden Materialproben einem fortlaufenden Ionenbeschuss ausgesetzt, so dass die Probe in Form einer dynamischen SIMS Schritt für Schritt abgetragen werden. Somit lassen sich Tiefenprofile der organischen wie auch der anorganischen molekularen Schichtstrukturen erstellen. Zusätzlich oder alternativ kann ein Nachweis der Schichtdicken und/oder -zusammensetzungen insbesondere mittels winkelauflösender Photoelektronensprektroskopie (ARXPS) erfolgen. Kombiniert man diese Methode mit einer ionenbeschussinduzierten Probenerosion (Sputtern), kann man so ebenfalls die Elementzusammensetzung in Form eines Tiefenprofils erstellen. Weiter zusätzlich oder alternativ kann ein, insbesondere bildgebender, Nachweis der Schichtdicken mittels Elektronenmikroskopie, insbesondere mittels Transmissionselektronenmikroskopie (TEM) und/oder mittels Rasterelektronenmikroskopie (REM), erfolgen. In Kombination mit energiedispersiver Röntgenspektroskopie (EDX) und/oder Elektronenenergieverlustspektroskopie (EELS) kann zudem ein Nachweis der chemischen Zusammensetzung der einzelnen Schichten erfolgen.

Die Erfindung wird im Folgenden anhand von nicht einschränkenden Ausführungsbeispielen, die in den Figuren dargestellt sind, näher erläutert. Darin zeigen, wenigstens teilweise schematisch:
- **Fig. 1**: ein Bauteil in einer perspektivischen Ansicht;
- **Fig. 2**: einen Schnitt durch eine Wandung des Bauteils der Fig. 1 nach einer ersten Ausführung;
- **Fig. 3**: einen Schnitt durch eine Wandung des Bauteils der Fig. 1 nach einer zweiten Ausführung;
- **Fig. 4**: ein Blockdiagramm eines ersten Ausführungsbeispiels eines Verfahrens zum Herstellen eines Bauteils;
- **Fig. 5**: ein Blockdiagramm eines zweiten Ausführungsbeispiels eines Verfahrens zum Herstellen eines Bauteils.

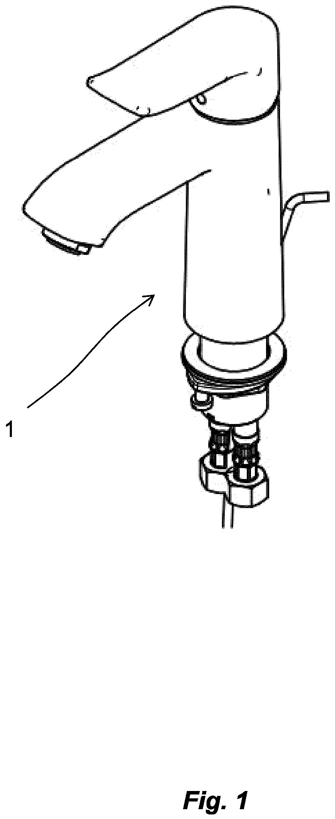

**Fig. 1** zeigt exemplarisch eine besonders vorteilhafte Ausführung eines Bauteils 1 gemäß der vorliegenden Offenbarung als ein Sanitärbauteil 1 in einer perspektivischen Ansicht.

Das Sanitärbauteil 1 ist exemplarisch beispielsweise ein(e) Mischer(-Armatur). Das Sanitärbauteil weist vorzugsweise einen Träger 2, eine Haftvermittlerschicht 3 und eine Außenschicht 4 auf. Der Träger 2 weist vorzugsweise ein Substrat 20, eine erste Zwischenschicht 21, eine zweite Zwischenschicht 22 und eine dritte Zwischenschicht 23 auf. In einer Weiterbildung weist der Träger 2 zudem eine vierte Zwischenschicht 24 auf.

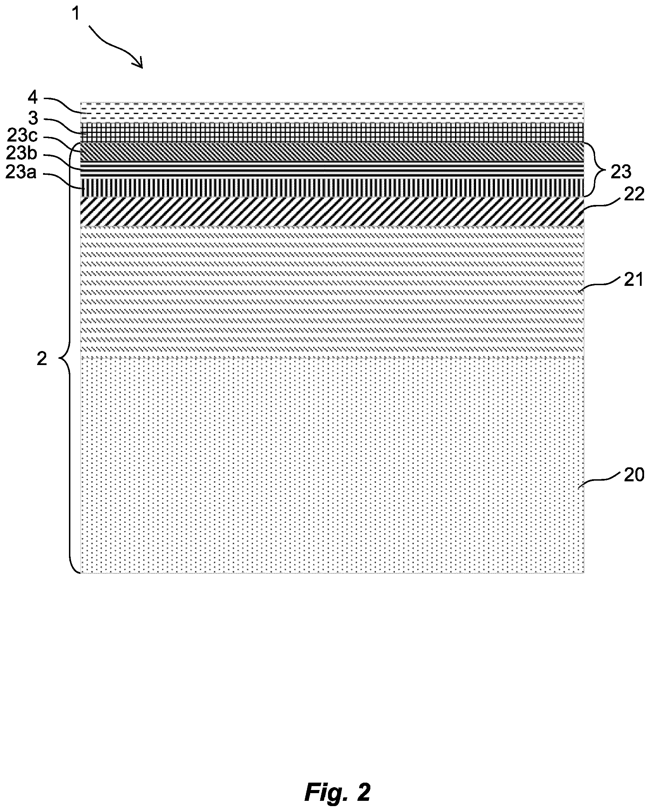

**Fig. 2** zeigt schematisch einen Teil einer Wandung des Bauteils 1 aus Fig.1 nach einer ersten Ausführung in einem Querschnitt.

Das Bauteil 1 weist einen Träger 2, eine Haftvermittlerschicht 3 und eine Außenschicht 4 auf. Der Träger 2 weist ein Substrat 20, eine erste Zwischenschicht 21, eine zweite Zwischenschicht 22 und eine dritte Zwischenschicht 23 auf.

In diesem Ausführungsbeispiel weist das Substrat eine Kupfer-Zink-Legierung, in einer Weiterbildung eine Messing-Legierung, und/oder eine Eisenlegierung, in einer Weiterbildung eine, vorzugsweise rostfreie, Stahl-Legierung, auf, kann insbesondere aus der Kupfer-Zink- bzw. Messing- bzw. Eisen- bzw. Stahl-Legierung bestehen.

Die erste Zwischenschicht 21 ist auf dem Substrat 20 angeordnet und weist Nickel, vorzugsweise Glanznickel und/oder Halbglanznickel, auf. Durch die erste Zwischenschicht 21 kann der Korrosionsschutz des Bauteils 1 verbessert werden. Vorzugsweise hat die erste Zwischenschicht 21 eine Dicke von wenigstens 2,5 µm, insbesondere von wenigstens 5 µm, in einer Weiterbildung von wenigstens 10 µm, und/oder von höchstens 50 µm, insbesondere von höchstens 25 µm, in einer Weiterbildung von höchstens 15 µm.

Die zweite Zwischenschicht 22 ist auf der ersten Zwischenschicht 21 angeordnet und weist Chrom auf. Durch die zweite Zwischenschicht 22 kann zum einen der Korrosionsschutz des Bauteils 1 verbessert werden, zum anderen verleiht die zweite Zwischenschicht 22 dem Bauteil 1 ein glänzendes, metallisches und somit optisch anspruchsvolleres Aussehen. Vorzugsweise hat die zweite Zwischenschicht 22 eine Dicke von wenigstens 50 nm, insbesondere von wenigstens 100 nm, und/oder von höchstens 1,2 µm, insbesondere von höchstens 900 nm, in einer Weiterbildung von höchstens 200 nm.

Die dritte Zwischenschicht 23 ist auf der zweiten Zwischenschicht 22 angeordnet und weist eine Verbindung ausgewählt aus den Verbindungen Zirkonnitrid, Zirkonkarbid, Zirkonoxid, Chromnitrid, Chromkarbid, Chromoxid, Titannitrid, Titankarbid und Titanoxid, Chrom-Wolframnitrid, Chrom-Wolframkarbid, Chrom-Wolframoxid oder einer Mischung daraus, auf.

Durch die dritte Zwischenschicht 23 kann die Oberflächenhärte des Bauteils 1 erhöht werden. Darüber hinaus können durch die dritte Zwischenschicht 23 die optischen Eigenschaften, insbesondere die Farbe und den Reflexionsgrad, des Bauteils 1 gezielt verändert werden und somit dem Bauteil 1 ein optisch anspruchsvolleres Aussehen verliehen werden. Vorzugsweise hat die dritte Zwischenschicht 23 eine Dicke von wenigstens 50 nm, insbesondere von wenigstens 100 nm, und/oder von höchstens 1,2 µm, insbesondere von höchstens 900 nm.

In dieser Ausführung ist die dritte Zwischenschicht 23 als Multilagenschicht ausgestaltet und weist eine erste Lage 23a, welche auf der zweiten Zwischenschicht 22 angeordnet ist und welche Zirkon, Chrom und/oder Titan aufweist, eine zweite Lage 23b, welche auf der ersten Lage 22a angeordnet ist und welche karbonitriertes Zirkon, karbonitriertes Chrom und/oder karbonitriertes Titan aufweist, und eine dritte Lage 23c, welche zwischen der zweiten Lage 22b und der Haftvermittlerschicht 3 angeordnet ist und welche Zirkonoxid, Chromoxid und/oder Titanoxid aufweist, auf. Vorzugsweise weist die erste Lage 23a Zirkon, die zweite Lage 23b karbonitriertes Zirkon und die dritte Lage 23c Zirkonoxid auf.

Vorzugsweise hat die erste Lage 23a eine Dicke von wenigstens 50 nm, insbesondere von wenigstens 100 nm, und/oder von höchstens 500 nm, insbesondere von höchstens 200 nm. Weiter vorzugsweise hat die zweite Lage 23b eine Dicke von wenigstens 50 nm, insbesondere von wenigstens 100 nm, und/oder von höchstens 500 nm, insbesondere von höchstens 200 nm. Weiter vorzugsweise hat die dritte Lage 23c eine Dicke von wenigstens 50 nm, insbesondere von wenigstens 100 nm, und/oder von höchstens 500 nm, insbesondere von höchstens 200 nm.

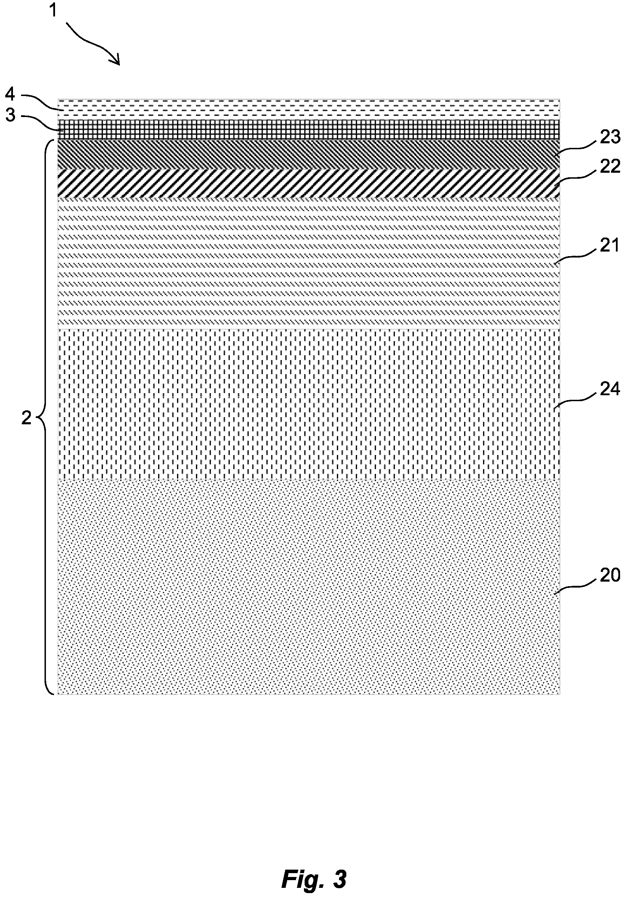

Alternativ kann die dritte Zwischenschicht 23 auch wie die in **Fig. 3** dargestellte Zwischenschicht 23 als einlagige Schicht oder auch mit mehr und/oder anderen Lagen ausgestaltet sein.

Die Haftvermittlerschicht 3 ist auf dem Träger 2 bzw. dessen dritter Zwischenschicht 23 angeordnet und weist ein Material der Zusammensetzung SiOₓ, wobei die chemische Zusammensetzung den Bereich x = 0 bis x = 2, in einer Weiterbildung x > 0 bis x = 2, umfasst, auf. Durch die Haftvermittlerschicht 3 kann die Haftung der Außenschicht 4 an dem Träger 2 verbessert werden. Insbesondere kann durch die Haftvermittlerschicht 3 die Beständigkeit der Außenschicht 4, insbesondere gegen zur Reinigung des Bauteils 1 eingesetzte Reinigungsmittel, verbessert werden. Vorzugsweise hat die Haftvermittlerschicht 3 eine Dicke von wenigstens 5 nm, insbesondere von wenigstens 10 nm, und/oder von höchstens 100 nm, insbesondere von höchstens 20 nm.

Die Außenschicht 4 ist auf der Haftvermittlerschicht 3 angeordnet und weist funktionalisiertes Polysiloxan auf. Durch die Außenschicht 4 können oberflächliche Verschmutzungen des Bauteils 1 verringert werden sowie ein Reinigen des Bauteils 1 erleichtert werden. Vorzugsweise hat die Außenschicht 4 eine Dicke von wenigstens 15 nm, insbesondere von wenigstens 20 nm, und/oder von höchstens 100 nm, insbesondere von höchstens 30 nm.

**Fig. 3** zeigt schematisch einen Teil einer Wandung des Bauteils 1 aus **Fig. 1** nach einer zweiten Ausführung im Querschnitt.

Das Bauteil 1 weist in dieser Ausführung einen Träger 2, eine Haftvermittlerschicht 3 und eine Außenschicht 4 auf. Der Träger 2 weist ein Substrat 20, eine erste Zwischenschicht 21, eine zweite Zwischenschicht 22, eine dritte Zwischenschicht 23 und eine vierte Zwischenschicht 24 auf.

In diesem Ausführungsbeispiel weist das Substrat eine Zinklegierung oder ein Polymer auf, kann insbesondere aus der Zinklegierung oder dem Polymer bestehen.

Die vierte Zwischenschicht 24 ist auf dem Substrat 20 angeordnet und weist Kupfer auf. Durch die vierte Zwischenschicht 24 kann die Haftung der ersten Zwischenschicht 21 an dem Substrat 2 verbessert werden. Vorzugsweise hat die vierte Zwischenschicht 24 eine Dicke von wenigstens 2,5 µm, insbesondere von wenigstens 5 µm, in einer Weiterbildung von wenigstens 10 µm, und/oder von höchstens 50 µm, insbesondere von höchstens 40 µm, in einer Weiterbildung von höchstens 20 µm.

Die erste Zwischenschicht 21 ist auf der vierten Zwischenschicht 24 angeordnet und weist Nickel, vorzugsweise Glanznickel und/oder Halbglanznickel, auf. Durch die erste Zwischenschicht 21 kann der Korrosionsschutz des Bauteils 1 verbessert werden. Vorzugsweise hat die erste Zwischenschicht 21 eine Dicke von wenigstens 2,5 µm, insbesondere von wenigstens 5 µm, in einer Weiterbildung von wenigstens 10 µm, und/oder von höchstens 50 µm, insbesondere von höchstens 25 µm, in einer Weiterbildung von höchstens 15 µm.

Die zweite Zwischenschicht 22 ist auf der ersten Zwischenschicht 21 angeordnet und weist Chrom auf. Durch die zweite Zwischenschicht 22 kann zum einen der Korrosionsschutz des Bauteils 1 verbessert werden, zum anderen verleiht die zweite Zwischenschicht 22 dem Bauteil 1 ein glänzendes, metallisches und somit optisch anspruchsvolleres Aussehen. Vorzugsweise hat die zweite Zwischenschicht 22 eine Dicke von wenigstens 50 nm, insbesondere von wenigstens 100 nm, und/oder von höchstens 1,2 µm, insbesondere von höchstens 900 nm, in einer Weiterbildung von höchstens 200 nm.

Die dritte Zwischenschicht 23 ist auf der zweiten Zwischenschicht 22 angeordnet und weist eine Verbindung ausgewählt aus den Verbindungen Zirkonnitrid, Zirkonkarbid, Zirkonoxid, Chromnitrid, Chromkarbid, Chromoxid, Titannitrid, Titankarbid und Titanoxid, Chrom-Wolframnitrid, Chrom-Wolframkarbid, Chrom-Wolframoxid oder einer Mischung daraus, auf. Durch die dritte Zwischenschicht 23 kann die Oberflächenhärte des Bauteils 1 erhöht werden. Darüber hinaus können durch die dritte Zwischenschicht 23 die optischen Eigenschaften, insbesondere die Farbe und den Reflexionsgrad, des Bauteils 1 gezielt verändert werden und somit dem Bauteil 1 ein optisch anspruchsvolleres Aussehen verliehen werden. Vorzugsweise hat die dritte Zwischenschicht 23 eine Dicke von wenigstens 50 nm, insbesondere von wenigstens 100 nm, und/oder von höchstens 1,2 µm, insbesondere von höchstens 900 nm.

In dieser Ausführung ist die dritte Zwischenschicht 23 als einlagige Schicht ausgestaltet. Alternativ kann die dritte Zwischenschicht 23 auch, insbesondere wie die in **Fig. 2** dargestellte Zwischenschicht 23, als Multilagenschicht ausgestaltet sein.

Die Haftvermittlerschicht 3 ist auf dem Träger 2 bzw. dessen dritter Zwischenschicht 23 angeordnet und weist ein Material der Zusammensetzung SiOₓ, wobei die chemische Zusammensetzung den Bereich x = 0 bis x = 2, in einer Weiterbildung x > 0 bis x = 2, umfasst, auf. Durch die Haftvermittlerschicht 3 kann die Haftung der Außenschicht 4 an dem Träger 2 verbessert werden. Insbesondere kann durch die Haftvermittlerschicht 3 die Beständigkeit der Außenschicht 4, insbesondere gegen zur Reinigung des Bauteils 1 eingesetzte Reinigungsmittel, verbessert werden. Vorzugsweise hat die Haftvermittlerschicht 3 eine Dicke von wenigstens 5 nm, insbesondere von wenigstens 10 nm, und/oder von höchstens 100 nm, insbesondere von höchstens 20 nm.

Die Außenschicht 4 ist auf der Haftvermittlerschicht 3 angeordnet und weist funktionalisiertes Polysiloxan auf. Durch die Außenschicht 4 können oberflächliche Verschmutzungen des Bauteils 1 verringert werden sowie ein Reinigen des Bauteils 1 erleichtert werden. Vorzugsweise hat die Außenschicht 4 eine Dicke von wenigstens 15 nm, insbesondere von wenigstens 20 nm, und/oder von höchstens 100 nm, insbesondere von höchstens 30 nm.

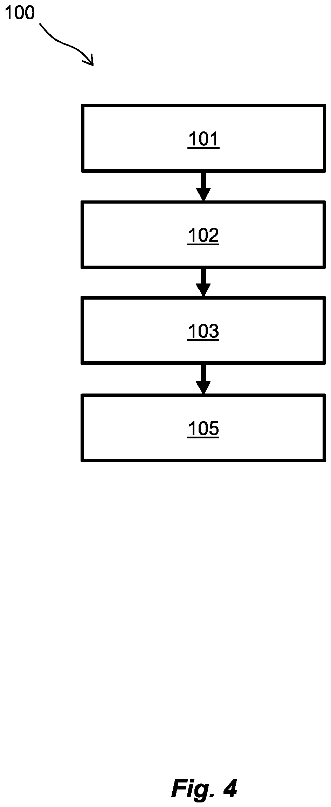

**Fig. 4** zeigt ein Blockdiagramm eines ersten Ausführungsbeispiels eines Verfahrens 100 zum Herstellen eines Bauteils 1.

In einem ersten Verfahrensschritt 101 des Verfahrens 100 zum Herstellen eines Bauteils 1 wird ein Träger 2 bereitgestellt. Der Träger 2 weist ein Substrat 20, welches eine Legierung, insbesondere eine Eisen-, Zink- und/oder Kupferlegierung, und/oder ein Polymer, insbesondere ein Thermoplast, aufweist, auf. Vorzugsweise ist der Träger 2 des Weiteren wie der in **Fig. 2** oder wie der **Fig. 3** dargestellte Träger 2 aufgebaut.

In einem zweiten Verfahrensschritt 102 des Verfahrens 100 zum Herstellen eines Bauteils 1 wird eine Haftvermittlerschicht 3 erzeugt. Vorzugsweise wird die Haftvermittlerschicht 3 mittels eines Vakuumbeschichtungsverfahrens erzeugt. Weiter vorzugsweise wird die Haftvermittlerschicht 3 mittels Plasmapolymerisation wenigstens eines Silikonöl-Präkursors, vorzugsweise in einer Sauerstoffatmosphäre, erzeugt.

In einem dritten Verfahrensschritt 103 des Verfahrens 100 zum Herstellen eines Bauteils 1 wird eine Außenschicht 4 erzeugt. Vorzugsweise wird die Außenschicht 4 mittels eines Vakuumbeschichtungsverfahrens erzeugt. Weiter vorzugsweise wird die Außenschicht 4 mittels, insbesondere plasmagestützter, Verdampfung eines funktionalisierten Beschichtungsmaterials erzeugt.

Vorzugseise werden die Verfahrensschritte Erzeugen 102 der Haftvermittlerschicht 3 und Erzeugen 103 der Außenschicht 4 in derselben Beschichtungskammer durchgeführt.

In einem weiteren Verfahrensschritt 105 des Verfahrens 100 zum Herstellen eines Bauteils 1 wird die Haftvermittlerschicht 3 und/oder die Außenschicht 4 wenigstens teilweise außerhalb der Beschichtungskammer vernetzt.

Der Verfahrensschritt Vernetzen 105 der Haftvermittlerschicht 3 und/oder der Außenschicht 4 außerhalb der Beschichtungskammer kann bei Raumtemperatur erfolgen. Alternativ oder zusätzlich kann der Verfahrensschritt Vernetzen 105 der Haftvermittlerschicht 3 und/oder der Außenschicht 4 außerhalb der Beschichtungskammer in einem Klimaschrank, insbesondere bei 80 °C und optional bei einer relativen Feuchtigkeit von 50 %, erfolgen. Alternativ oder zusätzlich kann der Verfahrensschritt Vernetzen 105 der Haftvermittlerschicht 3 und/oder der Außenschicht 4 außerhalb der Beschichtungskammer unter Bestrahlung mit UV-Licht, erfolgen.

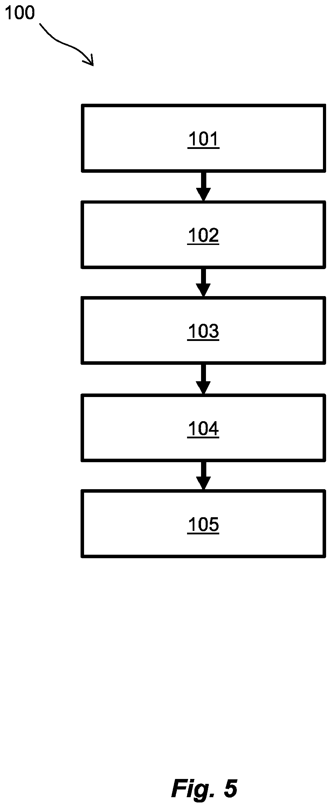

**Fig. 5** zeigt ein Blockdiagramm eines zweiten Ausführungsbeispiels eines Verfahrens 100 zum Herstellen eines Bauteils 1.

Die Verfahrensschritte Bereitstellen 101 des Trägers 2, Erzeugen 102 der Haftvermittlerschicht 3, Erzeugen 103 der Außenschicht 4 und Vernetzen 105 der Haftvermittlerschicht 3 und/oder der Außenschicht 4 außerhalb der Beschichtungskammer erfolgen wie für das in **Fig. 4** dargestellte erste Ausführungsbeispiels eines Verfahrens 100 zum Herstellen eines Bauteils 1.

Das in **Fig. 5** dargestellte zweite Ausführungsbeispiels eines Verfahrens 100 zum Herstellen eines Bauteils 1 unterscheidet sich von dem in **Fig. 4** dargestellte ersten Ausführungsbeispiels eines Verfahrens 100 zum Herstellen eines Bauteils 1 dadurch, dass nach dem Verfahrensschritt Erzeugen 103 der Außenschicht 4 und vor dem Verfahrensschritt Vernetzen 105 der Haftvermittlerschicht 3 und/oder der Außenschicht 4 außerhalb der Beschichtungskammer zusätzlich der Verfahrensschritt Vernetzen 104 der Haftvermittlerschicht 3 und/oder der Außenschicht 4 innerhalb der Beschichtungskammer erfolgt.

Der Verfahrensschritt Vernetzen 104 der Haftvermittlerschicht 3 und/oder der Außenschicht 4 innerhalb der Beschichtungskammer kann plasmagestützt, insbesondere unter Argonatmosphäre, erfolgen. Alternativ oder zusätzlich kann der Verfahrensschritt Vernetzen 104 der Haftvermittlerschicht 3 und/oder der Außenschicht 4 durch Vakuumbeschichten, Aufdampfen und/oder Sputtern innerhalb der Beschichtungskammer mittels SiO und/oder MgF₂ erfolgen. Weiter alternativ oder zusätzlich kann der Verfahrensschritt Vernetzen 104 der Haftvermittlerschicht 3 und/oder der Außenschicht 4 innerhalb der Beschichtungskammer mittels H₂O erfolgen.

In der vorliegenden Offenbarung impliziert "weist ein X auf" allgemein keine abschließende Aufzählung, sondern ist eine Kurzform von "weist wenigstens ein X auf" und umfasst auch "weist zwei oder mehr X auf" sowie "weist außer X auch Y auf". Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichen

- 1: Bauteil
- 2: Träger
- 20: Substrat
- 21: erste Zwischenschicht
- 22: zweite Zwischenschicht
- 23: dritte Zwischenschicht
- 23a: erste Lage
- 23b: zweite Lage
- 23c: dritte Lage
- 24: vierte Zwischenschicht
- 3: Haftvermittlerschicht
- 4: Außenschicht
- 100: Verfahren
- 101: Verfahrensschritt
- 102: Verfahrensschritt
- 103: Verfahrensschritt
- 104: Verfahrensschritt
- 105: Verfahrensschritt

## Patentansprüche

1. Bauteil (1), insbesondere Sanitärbauteil, aufweisend:
- einen Träger (2);
- eine siliziumoxidhaltige Haftvermittlerschicht (3), welche auf dem Träger (2) angeordnet ist; und
- eine siliziumhaltige und fluorfreie Außenschicht (4), welche auf der Haftvermittlerschicht (3) angeordnet ist;
wobei der Träger (2) ein Substrat (20) aufweist, welches eine Legierung, insbesondere eine Eisen-, Zink- und/oder Kupferlegierung, und/oder ein Polymer, insbesondere einen Thermoplast, aufweist.

2. Bauteil (1) nach Anspruch 1, wobei die Außenschicht (4) funktionalisiertes Polysiloxan aufweist.

3. Bauteil (1) nach Anspruch 1 oder 2, wobei die Haftvermittlerschicht (3) ein Material der Zusammensetzung SiOₓ aufweist, wobei die chemische Zusammensetzung den Bereich x = 0 bis x = 2 umfasst.

4. Bauteil (1) nach einem der vorhergehenden Ansprüche, wobei
- eine Dicke der Außenschicht (4) wenigstens 15 nm und/oder höchstens 100 nm, insbesondere wenigstens 20 nm und/oder höchstens 30 nm, beträgt; und/oder
- eine Dicke der Haftvermittlerschicht (3) wenigstens 5 nm und/oder höchstens 100 nm, insbesondere wenigstens 10 nm und/oder höchstens 20 nm, beträgt.

5. Bauteil (1) nach einem der vorhergehenden Ansprüche, wobei der Träger (2) eine erste Zwischenschicht (21) aufweist, welche zwischen dem Substrat (20) und der Haftvermittlerschicht (3) angeordnet ist, wobei diese erste Zwischenschicht (21) Nickel aufweist.

6. Bauteil (1) nach Anspruch 5, wobei:
- eine Dicke der ersten Zwischenschicht (21) wenigstens 2,5 µm und/oder höchstens 50 µm, insbesondere wenigstens 5 µm und/oder höchstens 25 µm, beträgt; und/oder
- der Träger (2) eine zweite Zwischenschicht (22) aufweist, welche zwischen der ersten Zwischenschicht (21) und der Haftvermittlerschicht (3) angeordnet ist, wobei diese zweite Zwischenschicht (22) Chrom aufweist.

7. Bauteil (1) nach Anspruch 6, wobei:
- die Dicke der zweiten Zwischenschicht (22) wenigstens 50 nm und/oder höchstens 1,2 µm, insbesondere wenigstens 100 nm und/oder höchstens 900 nm, beträgt; und/oder
- der Träger (2) eine dritte Zwischenschicht (23) aufweist, welche zwischen der zweiten Zwischenschicht (22) und der Haftvermittlerschicht (3) angeordnet ist, wobei diese dritte Zwischenschicht (23) eine Verbindung ausgewählt aus den folgenden Verbindungen aufweist: Zirkonnitrid, Zirkonkarbid, Zirkonoxid, Chromnitrid, Chromkarbid, Chromoxid, Titannitrid, Titankarbid und Titanoxid, Chrom-Wolframnitrid, Chrom-Wolframkarbid, Chrom-Wolframoxid oder einer Mischung daraus.

8. Bauteil (1) nach Anspruch 7, wobei:
- eine Dicke der dritten Zwischenschicht (23) wenigstens 50 nm und/oder höchstens 1,2 µm, insbesondere wenigstens 100 nm und/oder höchstens 900 nm, beträgt; und/oder
- der Träger (2) eine vierte Zwischenschicht (24) aufweist, welche zwischen dem Substrat (20) und der ersten Zwischenschicht (21) angeordnet ist, wobei diese vierte Zwischenschicht (24) Kupfer aufweist, vorzugsweise wobei eine Dicke der vierten Zwischenschicht (24) wenigstens 2,5 µm und/oder höchstens 50 µm, insbesondere wenigstens 5 µm und/oder höchstens 40 µm, beträgt.

9. Bauteil (1) nach einem der vorherigen Ansprüche, welches mittels eines Verfahrens (100) nach einem der Ansprüche 10 bis 15 herstellbar ist.

10. Verfahren (100) zum Herstellen eines Bauteils (1) nach einem der vorherigen Ansprüche, wobei das Verfahren folgende Schritte aufweist:
- Bereitstellen (101) des Trägers (2);
- Erzeugen (102) der Haftvermittlerschicht (3), insbesondere mittels eines Vakuumbeschichtungsverfahrens;
- Erzeugen (103) der Außenschicht (4), insbesondere mittels eines Vakuumbeschichtungsverfahrens.

11. Verfahren (100) nach Anspruche 10, wobei die Haftvermittlerschicht (3) mittels Plasmapolymerisation wenigstens eines Silikonöl-Präkursors, vorzugsweise in einer Sauerstoffatmosphäre, und/oder mittels Vakuumverdampung und/oder mittels Sputtern erzeugt wird.

12. Verfahren (100) nach Anspruche 10 oder 11, wobei die Außenschicht (4) mittels, insbesondere plasmagestützter, Verdampfung eines funktionalisierten Beschichtungsmaterials erzeugt wird.

13. Verfahren (100) nach einem der Ansprüche 10 bis 12, wobei die Verfahrensschritte Erzeugen (102) der Haftvermittlerschicht (3) und Erzeugen (103) der Außenschicht (4) in derselben Beschichtungskammer durchgeführt werden.

14. Verfahren (100) nach einem der Ansprüche 10 bis 13, wobei das Verfahren nach dem Verfahrensschritt Erzeugen (103) der Außenschicht (4) den Verfahrensschritt aufweist:
- Vernetzen (105) der Haftvermittlerschicht (3) und/oder der Außenschicht (4) wenigstens teilweise außerhalb der Beschichtungskammer.

15. Verfahren (100) nach Anspruch 14, wobei das Verfahren nach dem Verfahrensschritt Erzeugen (103) der Außenschicht (4) und vor dem Verfahrensschritt Vernetzen (105) der Haftvermittlerschicht (3) und/oder der Außenschicht (4) außerhalb der Beschichtungskammer den Verfahrensschritt aufweist:
- Vernetzen (104) der Haftvermittlerschicht (3) und/oder der Außenschicht (4) teilweise innerhalb der Beschichtungskammer
